Europäisches Patentamt

European Patent Office

Office européen des brevets

(11) Publication number: 0 384 080
A2

# EUROPEAN PATENT APPLICATION

(21) Application number: 89313024.5

(51) Int. Cl.5: C09C 1/50

(22) Date of filing: 13.12.89

(30) Priority: 02.02.89 US 305707

(43) Date of publication of application:
29.08.90 Bulletin 90/35

(84) Designated Contracting States:
DE ES FR GB IT NL SE

(71) Applicant: COLUMBIAN CHEMICALS
COMPANY
1600 Parkwood Circle Suite 400
Atlanta Georgia 30339(US)

(72) Inventor: Jones, William Ross, Jr.
3509 Pegram,
Monroe, Louisiana 71202(US)
Inventor: Taylor, Rodney, L.
Route 3, Box 224F
Monroe, Louisiana 71203(US)

(74) Representative: Dealtry, Brian et al
Eric Potter & Clarkson St. Mary's Court St.
Mary's Gate
Nottingham NG1 1LE(GB)

(54) Reactor and method for production of carbon black with broad particle size distribution.

(57) A reactor and method for producing carbon black in an axial flow carbon black reactor results in carbon black with a relatively broad particle size distribution and a heterogeneity index of greater than 1.55 and less than or equal to about 2.0. The reactor includes a combustion chamber, a choke, and an exit chamber, wherein the ratio of the cross-sectional flow area of the combustion chamber to the cross-sectional flow area of the choke is less than or equal to about 6.9, and the ratio of the cross-sectional flow area of the exit chamber to the cross-sectional flow area of the choke is less than or equal to about 3.5. The cross-sectional flow area of the choke section is preferably greater than about 50 square inches. The linear velocity of the reaction mixture through the reactor is controlled so that the linear velocity of the reaction mixture through the reactor is less than 1200 feet per second and preferably less than 1000 feet per second. The axial flow allows for the introduction of greater amounts of feedstock hydrocarbon into the flow of hot gas, resulting in a higher yield of broad particle size distribution of carbon black.

EP 0 384 080 A2

## REACTOR AND METHOD FOR PRODUCTION OF CARBON BLACK WITH BROAD PARTICLE SIZE DISTRIBUTION

### Technical Field

The present invention relates to the production of carbon black, and more particularly to the production of carbon black having a broad particle size distribution.

### Background of the Invention

The basic method for the production of carbon black is well known. Generally, carbon black is produced by injecting a hydrocarbon raw material (hereinafter called "feedstock hydrocarbon") into a flow of hot oxygen-containing gas wherein the feedstock hydrocarbon is pyrolyzed and converted into a smoke before being quenched by a water spray. The hot gas is produced by burning fuel in a combustion chamber. The hot gas flows from the combustion chamber into a reaction chamber which is in open communication with the combustion chamber. The feedstock hydrocarbon is introduced into the hot gas as the hot gas flows through the reaction chamber, thereby forming a reaction mixture comprising particles of forming carbon black. The reaction mixture flows from the reaction chamber into an exit chamber which is in open communication with the reaction chamber. At some location in the exit chamber, a quench spray is introduced into the flowing reaction mixture, thereby lowering the temperature of the reaction mixture below the temperature necessary for carbon black production and halting the carbon formation reaction. The carbon black particles are then separated from the flow of gas.

There are several physical properties of carbon black which may be varied to produce distinctive carbon blacks which are particularly effective in certain applications. The particle size distribution is one such physical property of carbon black and is a measure of the uniformity of size of the individual particles of carbon black. In a carbon black with a narrow particle size distribution, the individual particles of carbon black are substantially uniform in size. A carbon black with a broad particle size has individual particles of carbon black which vary relatively widely in size.

Broad particle size distribution carbon black is particularly suited for use as a black pigment in inks, plastics, and xerographic toners. A carbon black with a broad particle size distribution has some particles which are relatively small and some particles which are relatively large. When the solid carbon black particles are mixed with a liquid, the relatively small particles fill the gaps between the relatively large particles. When carbon black particles having a narrow particle size distribution are mixed with a liquid, the gaps between the carbon black particles are completely filled with liquid because there are no smaller carbon black particles to fill those gaps. Therefore, a greater mass of broad particle size distribution carbon black can fit into a given unit of liquid volume. Accordingly, more broad particle size distribution carbon black can be loaded into inks and plastics to achieve darker black inks and plastics. In addition, broad particle size distribution carbon black is more easily dispersed in liquids. Further, broad particle size distribution carbon black does not appreciably reduce the smoothness of extruded plastic products which contain broad particle size distribution carbon black.

Broad particle size distribution carbon black has previously been produced in carbon black reactors wherein a feedstock hydrocarbon is injected into a relatively low velocity spiraling flow of hot oxygen-containing gas. Carbon black reactors which have a spiraling flow of hot gas often are called "tangential flow" reactors. Although these prior art tangential flow reactors are effective to produce broad particle size distribution carbon black, there are some disadvantages in producing broad particle size distribution carbon black in a tangential flow reactor. One disadvantage of the tangential flow reactor is that the centrifugal force created by the spiraling gas flow tends to force the injected feedstock hydrocarbon to impinge against the hot inner walls of the reactor. The relatively cool feedstock hydrocarbon introduced into the reactor turns into coke upon contact with the hot inner walls of the reactor and can often cause thermal shock and cracking of the inner walls of the reactor. The coke is often called "impingement coke" and pieces of the cracked reactor are often called "refractory grit." The impingement coke and refractory grit often detach from the inner walls of the reactor, reenter the flow of hot gas, and contaminate the carbon black product.

The problem of feedstock hydrocarbon impingement increases as the amount of feedstock hydrocarbon injected into the flow of hot gas increases. This limits the amount of feedstock hydrocarbon which can be injected into the spiraling hot gas flow without the impingement coke and the refractory grit becoming a significant contamination problem. For a given flow rate of hot gas, a lower amount of injected feedstock hydrocarbon results in a lower density of feedstock hydrocarbon in the flow of hot gas. The lower density of feedstock hydrocarbon in the flow of hot gas results in a lower yield of carbon black per unit of hot gas and per unit of injected feedstock hydrocarbon. Likewise, a higher density results in a higher yield of carbon black. Accordingly, the limited amount of feedstock hydrocarbon which can be injected into the spiraling flow of hot gas and the corresponding lower yield of carbon black combined with the low velocity necessary for the production of broad particle size distribution results in a low production rate of broad particle size distribution carbon black with a tangential flow reactor.

Broad particle size distribution carbon black has also been produced in large-diameter tangential flow carbon black reactors. These reactors are cylindrical and have a diameter up to eight feet. The feedstock hydrocarbon is injected axially into the center of the spiraling gas flow. Because of the extremely large diameter of the reactors, the feedstock normally does not impinge on the inner walls of the reactor and create impingement coke and refractory grit. However, the large diameter reactors are very costly because of the large capital cost required to fabricate the large pieces which comprise the larger size reactors. The large diameter reactors are also costly to operate because of the large volume of hot gas per unit of feedstock hydrocarbon required to operate the reactors.

Therefore, there is a need for a method for production of broad particle size distribution carbon black which is generally more efficient and produces broad particle size distribution carbon black in greater yields and with less impurities.

## Summary of the Invention

Generally, the present invention solves the above-described problems in the prior art by providing a carbon black reactor which comprises a combustion chamber which produces a flow of hot gas, a choke which receives the flow of hot gas from the combustion chamber, and an exit chamber which receives the flow of hot gas from the choke. The ratio of the cross-sectional flow area of the combustion chamber to the cross-sectional flow area of the choke is less than or equal to about 6.9, and the ratio of the cross-sectional flow area of the exit chamber to the cross-sectional flow area of the choke is less than or equal to about 3.5. The reactor directs the flow of hot oxygen-containing gas axially through the choke and introduces a feedstock hydrocarbon into the axial flow of hot gas, thereby forming an axial flow of a reaction mixture including hot gas and particles of forming carbon black.

The method of the present invention includes the step of directing the flow of hot gas through the choke of the apparatus of the present invention at a linear velocity less than about 1200 feet per second and preferably less than about 1000 feet per second.

The apparatus and method of the present invention produce a carbon black with a broad particle size distribution at relatively high production rates. The sizes of the exit chamber and the combustion chamber relative to that of the choke of the present invention allow the apparatus of the present invention to operate at a relatively low velocity and maintain high throughput of hot gas and thus a high production rate of carbon black.

When the reaction mixture is directed at a relatively low velocity through the choke as in the method of the present invention, the reaction mixture is subjected to low turbulence mixing. Accordingly, the feedstock hydrocarbon does not make uniform contact with the oxygen in the hot gas flow. As a result, all the feedstock hydrocarbon does not pyrolyze under the same conditions. A portion of the feedstock hydrocarbon is pyrolyzed substantially immediately upon entering the flow of hot gas, while other portions of the feedstock hydrocarbon are pyrolyzed further downstream. Under different reaction conditions, different sizes of carbon black particles are formed. Consequently, some of the particles of carbon black formed are small while others are large, resulting in a carbon black with a broad particle size distribution.

With the reactor and method of the present invention, the feedstock hydrocarbon is less likely to impinge on the inner walls of the reactor because the axial flow of the hot gas carries the particles of feedstock hydrocarbon axially through the reactor. Accordingly, the reaction mixture travels substantially parallel to the central longitudinal axis and the inner walls of the reactor, and the formation of coke and refractory grit contaminants is substantially reduced.

Because the feedstock hydrocarbon is less likely to impinge on the inner walls of the reactor, the feedstock hydrocarbon can be introduced at a greater rate into the axial flow of hot gas thereby increasing the density of the feedstock hydrocarbon in the flow of hot gas. Accordingly, the yield of the carbon black produced per unit of hot gas and per unit of feedstock hydrocarbon is improved. This aspect of the present invention is particularly advantageous because of the low velocity of hot gas flow necessary in prior art reactors to produce broad particle size distribution carbon black without also producing contaminants. By increasing the yield of carbon black, the production rate of the carbon black is increased without increasing the velocity of the gas flow through the reactor.

More specifically, the cross-sectional flow area of the choke of the present invention is preferably greater than about 50 square inches, whereby the throughput of hot gas through the choke at low velocities is enhanced.

Therefore, an object of the present invention is to provide an improved reactor and method for the production of broad particle size distribution carbon black.

Another object of the present invetion is to provide a reactor and method for the production of broad particle size distribution carbon black while substantially reducing the presence of impingement coke and refractory grit in the.carbon black product.

Another object of the present invention is to provide a reactor and method for the production of broad particle size distribution carbon black in increased yield.

Other objects, features, and advantages will become apparent from reading the following specifications in conjunction with the accompanying drawings.

**Brief Description of Drawing**

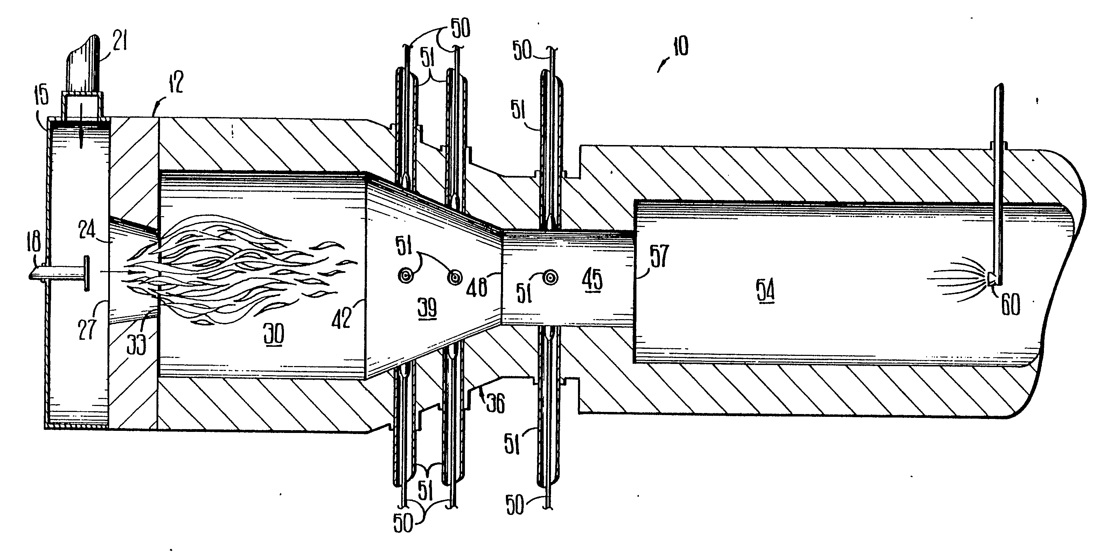

The figure is a schematic sectioned plan view of the reactor according to a preferred embodiment of the present invention.

**Detailed Description of the Preferred Embodiment**

A carbon black reactor for the production of broad particle size distribution carbon black is shown generally at 10 in the figure. The carbon black reactor 10 includes a combustion section 12. The combustion section 12 comprises a cylindrical air inlet chamber 15 having an inlet opening 18 in the upstream end of the air inlet chamber for the introduction of a hydrocarbon burner and a second opening 21 in ther peripheral wall of the air inlet chamber for the introduction of an oxygen-containing gas. A combustion choke 24 extends from the downstream end of the air inlet chamber 15 and is axially aligned with the air inlet chamber. The combustion choke 24 is in open communication with the air inlet chamber 15 through an opening 27 in the downstream end of the air inlet chamber. A cylindrical combustion chamber 30 is mounted to the downstream end of the combustion choke 24. The combustion chamber 30 is axially aligned with the combustion choke 24 and the air inlet chamber 15 and extends forward from the downstream end of the combustion choke. The combustion chamber 30 is in open communication with the combustion choke 24 through an opening 33 in the upstream end of the combustion chamber.

The reactor 10 also includes a reaction section 36 axially aligned with the combustion section 12. The reaction section 36 comprises a cone-shaped reaction chamber 39 extending forward from the downstream end of the combustion chamber 30. The reaction chamber 39 is in open communication with the combustion chamber 30 through the open downstream end 42 of the combustion chamber. The reaction chamber 39 has an inner diameter which gradually decreases as the reaction chamber converges towards a cylindrical reaction choke 45. The reaction choke 45 extends forward from the convergent end of the reaction chamber 39, and the reaction choke is in open communication with the reaction chamber through an opening 48 in the convergent end of the reaction chamber.

The reaction choke 45 defines a cross-sectional flow area which is substantially uniform along the length of the reaction choke. The cross-sectional flow area of the reaction choke 45 is preferably greater than or equal to about 50 square inches and even more preferably greater than about 64 square inches. Further, the combustion chamber 30 also defines a cross sectional flow area and the ratio of the cross-sectional flow area of the combustion chamber to the cross-sectional area of the choke 45 is preferably less than or equal to about 6.9 and more preferably less than or equal to about 5.4.

Feedstock hydrocarbon injection nozzles 50 are preferably positioned along the length of the reaction chamber 39 and the reaction choke 45. The feedstock hydrocarbon injection nozzles 50 extend through the outer walls of the reaction chamber 39 and the reaction choke 45 into the interior of the carbon black reactor 10. The injection nozzles 50 are cooled by an annular flow of air through annular conduits 51 which encase the injection nozzles. Although three sets of feedstock hydrocarbon injection nozzles are shown in the figure, it should be understood that the reactor of the present invention is not limited to a specific number of feedstock hydrocarbon injection nozzles.

A cylindrical exit chamber 54 is mounted to the downstream end of the reaction choke 45. The exit chamber 54 is axially aligned with the reaction section 36 and the combustion section 12 of the carbon black reactor 10 and extends forward from the downstream end of the reaction choke 45. The exit chamber 54 is in open communication with the reaction choke 45 through an opening 57 in the upstream end of the exit chamber. The diameter of the exit chamber 54 is substantially larger than the diameter of the reaction choke 45 and increases abruptly at the opening 57 in the upstream end of the exit chamber. Thus, the exit chamber 54 defines a cross-sectional flow area which is greater than the cross-sectional flow area of the choke 45. The ratio of the cross-sectional flow area of the exit chamber 54 to the cross-sectional flow area of the choke is preferably less than or equal to about 3.5 and more preferably less than or equal to about 2.8. A quench spray nozzle 60 extends into the exit chamber 54 at location distal from the opening 57 in the upstream end of the exit chamber.

Although the carbon black reactor 10 is shown in the figure having a circular cross-section, it should be understood that carbon black reactors having non-circular cross sections can be used to practice the present invention.

The carbon black production process begins in the combustion section 12 of the carbon black reactor 10 where a hydrocarbon material such as natural gas is mixed with an oxygen-containing gas such as air and combusted. A quantity of oxygen-containing gas normally in excess of the amount necessary for complete combustion of the hydrocarbon material is introduced through the air inlet opening 21 in the air inlet chamber 15. The oxygen-containing gas is directed by the air inlet opening 21 into the air inlet chamber 15 substantially directly towards the center of the air inlet chamber so as not to cause a swirling or tangential gas flow along the inner walls of the air inlet chamber. The hydrocarbon material is introduced through the hydrocarbon inlet opening 18 into the air inlet chamber 15.

The hot gas produced by the combustion of the hydrocarbon in the oxygen-containing gas flows substantially axially through the reactor 10, that is, the hot gas flows substantially parallel to the longitudinal axis of the reactor. The hot gas flows substantially axially from the air inlet chamber 15, through the opening 27 in the downstream end of the air inlet chamber, axially through the combustion choke 24, through the opening 33 in the upstream end of the combustion chamber 30, and then axially through the combustion chamber towards the reaction chamber 39. As the hot combustion gas flows axially through the convergent reaction chamber 39, through the opening 48 in the convergent end of the reaction chamber, and axially through the reaction choke 45, feedstock hydrocarbon is injected through the injection nozzles 50 into the flow of hot combustion gas. The hot oxygen-containing combustion gas pyrolyzes the feedstock hydrocarbon as the feedstock hydrocarbon enters the flow of hot oxygen-containing gas, thereby forming a substantially axial flow of a reaction mixture including hot gas and particles of forming carbon black.

The velocity of the hot combustion gas and thus of the reaction mixture mass is controlled by the amount of hydrocarbon material and oxygen-containing gas introduced into the combustion section 12 of the reactor 10 and by the reaction choke 45, so that the reaction mixture travels axially through the reaction choke at a relatively low velocity. To practice the process of the present invention, the velocity of the flow of reaction mixture through the reaction choke is maintained less than about 1200 feet per second and preferably less than about 1000 feet per second. The low velocity of the reaction mixture through the reaction choke 45 creates a low degree of turbulence in the flow of reaction mixture, which is sufficient to cause a low level of mixing of the feedstock hydrocarbon and the hot gas. However, the low degree of turbulence is not sufficient for completely uniform mixing of the feedstock hydrocarbon with the hot gas. As a result, portions of the feedstock hydrocarbon are pyrolyzed prior to other portions of the feedstock hydrocarbon. Accordingly, some portions of the feedstock hydrocarbon are pyrolyzed under different conditions than other portions of the feedstock hydrocarbon, and, consequently, some portions of the feedstock hydrocarbon become relatively large particle carbon black while other portions of the feedstock hydrocarbon become relatively small particle carbon black. The end result is a carbon black product with a broad particle size distribution.

The carbon black particles formed from the pyrolyzed feedstock hydrocarbon flow from the reaction choke 45 through the opening 57 in the rearward end of the exit chamber 54, and through the exit chamber towards a spray of water injected by the quench spray nozzle 60 which quenches the carbon formation reaction. The carbon black particles are then separated from the flow of gases. It should be understood that the carbon black product recovery is not a part of this invention and thus is not discussed here in detail.

The particle size distribution of carbon black is reflected by a dimensionless term called the heterogeneity index (HI). The higher the HI, the broader the particle size distribution of the carbon black. A carbon black with an HI of 1.0 has a totally uniform particle size distribution. The HI is calculated according to the following equation:

$$HI = \frac{D_{wm}}{D_m}$$

5

where:

Dm = the number average aggregate diameter, and

Dwm = the weight mean aggregate diameter. Dm and Dwm are calculated according to methods described in Rubber Chemistry and Technology, Vol. 56, No. 5, November-December 1983, pages 892-899, 917 and based on measurements made with Electron Microscope Image analysis described in ASTM D-3849-85. When the velocity of the flow of reaction mixture through the reaction choke is maintained less than about 1200 feet per second, and preferably less than 1000 feet per second, the resulting carbon black exhibits a heterogeneity index (HI) of from about 1.5 to about 2.0.

The axial flow of hot combustion gas through the carbon black reactor 10 sustantially reduces impingement of the feedstock hydrocarbon on the inner walls of the reaction chamber 39 and the reaction choke 45. Because the flow of hot gas through the reactor 10 is axial, the hot gas travels substantially parallel to the inner walls of the reaction chamber 39 and the reactor choke 45. Accordingly, when the feedstock hydrocarbon enters the flow of hot gas, the flow of hot gas carries the feedstock hydrocarbon and the particles of forming carbon black parallel to the inner walls of the reaction chamber and the reaction choke, thereby substantially avoiding contact with the inner walls of the reaction chamber and the reaction choke. Eliminating impingement of the feedstock hydrocarbon and the particles of forming carbon black substantially eliminates the presence of impingement coke and refractory grit in the carbon black product. In addition, eliminating impingement of the feedstock hydrocarbon and the particles of forming carbon black allows the feedstock hydrocarbon to be introduced at a greater rate into the flow of hot gas, thereby increasing the density of the feedstock hydrocarbon in the flow of hot gas. Thus, the yield of carbon black per unit of hot gas and per unit of feedstock hydrocarbon is improved. Elimination of feedstock hydrocarbon impingement also allows for the conversion of the maximum amount of feedstock hydrocarbon into carbon black and thus the maximum yield of carbon black product.

In addition, because the ratio of the cross-sectional flow area of the combustion chamber 30 to the cross sectional flow area of the choke 45 is less than or equal to about 6.9 and the ratio of the cross sectional flow area of the exit chamber 54 to the cross-sectional flow area of the choke is less than or equal to about 3.5, a high throughput of hot gas and feedstock hydrocarbon through the choke is maintainable while the velocity of the hot gas through the choke remains relatively low. Thus, a high production rate of broad particle size carbon black is obtainable. Further, because the reaction choke 45 has a cross-sectional flow area of greater than 50 square inches, the high throughput capabilities and the high production rate capabilities of the reactor 10 are enhanced.

The invention is further illustrated by the following examples which are designed to teach those of ordinary skill in the art how to practice this invention and represent the best mode contemplated for carrying out this invention. Specifications for the reactors used in each of the examples hereinbelow are provided in Table 1. The following symbols are used in Table 1 to indicate the reactor specifications: A is the diameter of the combustion chamber; B is the diameter of the reaction choke; C is the diameter of the exit chamber; D is the cross-sectional flow area of the combustion chamber; E is the cross-sectional flow area of the reaction choke; F is the cross-sectional flow area of the exit chamber; and D/E and F/E are the ratios of the respective cross-sectional flow areas.

## Example 1

A carbon black reactor was fabricated according to the preferred embodiment described hereinabove and the specifications provided in Table 1. Carbon black was produced by injecting feedstock hydrocarbon into a flow of hot gas traveling axially through the reaction choke at a velocity of 946 feet per second. The carbon black was treated with potassium hydroxide to lower the structure of the resulting carbon black independently of the other properties of the carbon black by methods well known to those of ordinary skill in the art. The resulting carbon black was then analyzed to determine various properties of the carbon black and the results are shown in Table 1. The tint was measured according to ASTM D-3265-88, the iodine surface area was measured according to ASTM D-1510-88A, the CTAB surface area was measured according to ASTM D-3765-85, the nitrogen surface area was measured according to ASTM D-3037-88, and the DBP absorption was measured according to ASTM D-2414-88. The electron microscope surface area and the mean particle size were measured according to ASTM D-3849-87 and the HI was calculated as described hereinabove. The resulting carbon black had an HI of 1.59 which indicates a relatively broad particle size distribution.

## Example 2

A carbon black reactor was fabricated according to the preferred embodiment described hereinabove except for the specifications indicated in Table 1. As shown in Table 1, the diameter, and thus the cross-sectional flow area of the choke, are smaller than that of the reactor used or Example 1. Carbon black was produced by injecting feedstock hydrocarbon into a flow of hot gas travelling axially through the reaction choke at a velocity of 1635 feet per second. The resulting carbon black was analyzed to determine the same properties as were measured in Example 1. The resulting carbon had properties very similar to those of the carbon black from Example 1 except for the structure as shown by the DBP absorption and the HI which, at 1.51, was significantly lower than the HI of the carbon black from Example 1.

## Example 3

A carbon black reactor was fabricated according to the preferred embodiment shown in U.S. Application Serial No. 142,478, by Berg, et al., filed on January 11, 1987, the disclosure of which is hereby incorporated by reference, and the specifications provided in Table 1. The cross-sectional flow area of the choke was non-circular. Carbon black was produced by injecting feedstock hydrocarbon into a flow of hot gas travelling axially through the reactor at a velocity of 1635 feet per second. The resulting carbon black was analyzed to determine the same properties as were measured in Example 1. The resulting carbon black had properties very similar to those of the carbon black from Example 1 except for the structure and the HI which, at 1.48, was significantly lower than the HI of the carbon black from Example 1.

The higher HI of the carbon black from Example 1 relative to the HI of the carbon blacks from Examples 2 and 3 is attributable to the greater cross sectional flow area of the reactor choke and the low velocity of the hot gas used in Example 1. The higher HI of the carbon black from Example 1 indicates a significantly broader particle size distribution of the carbon black from Example 1 than that of the carbon blacks obtained from Examples 2 and 3.

## Example 4

In the carbon black reactor used in Example 1 hereinabove, carbon black was produced by injecting feedstock hydrocarbon into a flow of hot gas traveling axially through the reactor at a velocity of 828 feet per second. As in Example 1, the carbon black was treated with potassium hydroxide to lower the structure of the carbon black. The resulting carbon black was then analyzed to determine the same properties as were measured in Example 1. The resulting carbon black had an HI of 1.64 which also indicates a relatively broad particle size distribution.

## Example 5

In the carbon black reactor used in Example 2 hereinabove, carbon black was produced by injecting feedstock hydrocarbon into a flow of hot gas traveling at a velocity of 1638 feet per second. The resulting carbon black was analyzed to determine the same properties as were measured in Example 1. The resulting carbon black had properties very similar to those of the carbon black from Example 4 except for the structure, as shown by the DBP absorption and the HI which, at 1.55, was significantly lower than the HI of the carbon black from Example 4.

## Example 6

In the carbon black reactor used in Example 3 hereinabove, carbon black was produced by injecting feedstock hydrocarbon into a flow of hot gas travelling at a velocity of 1569 feet per second. The resulting

7

carbon black was analyzed to determine the same properties as were measured in Example 1. The resulting carbon black had properties very similar to those of the carbon black from Example 4 except for the structure and the HI which, at 1.50, was significantly lower than the HI of the carbon black from Example 4.

As with Example 1, the higher HI of the carbon black from Example 4 relative to the HI of the carbon blacks from Examples 5 and 6 is attributable to the greater cross-sectional flow area of the reactor choke and the low velocity of the hot gas used in Example 4. Again, the higher HI of the carbon black from Example 4 indicates a significantly broader particle size distribution of the carbon black from Example 4 than that of the carbon blacks obtained from Examples 5 and 6.

## Table 1

| | Ex.1 | Ex.2 | Ex.3 | Ex.4 | Ex.5 | Ex.6 |
|---|---|---|---|---|---|---|
| **Reactor Specifications** | | | | | | |
| A (in) | 21 | 21 | 21 | 21 | 21 | 21 |
| B (in) | 9 | 7 | 7* | 9 | 7 | 7* |
| C (in) | 15 | 15 | 15 | 15 | 15 | 15 |
| D (in$^2$) | 346 | 346 | 346 | 346 | 346 | 346 |
| E (in$^2$) | 64 | 38 | 38 | 64 | 38 | 38 |
| F (in$^2$) | 177 | 177 | 177 | 177 | 177 | 177 |
| D/E | 5.4 | 9.1 | 9.1 | 5.4 | 9.1 | 9.1 |
| F/E | 2.8 | 4.6 | 4.6 | 2.8 | 4.6 | 4.6 |

### Properties of Carbon Black Produced

| ** Velocity of Hot Gas Through Reaction Choke (fps) | 946 | 1635 | 1635 | 828 | 1638 | 1569 |
|---|---|---|---|---|---|---|
| Tint %, relative to IRB 3 | 127 | 121 | 120 | 123 | 109 | 113 |
| Iodine Surface Area (mg/g) | 127 | 124 | 122 | 97 | 107 | 107 |
| CTAB Surface Area ($m^2$/g) | 116 | 123 | 121 | 102 | 100 | 104 |
| Nitrogen Surface Area ($m^2$/g) | 120 | 127 | 130 | 95 | --- | --- |
| DBP Absorption (ml/100g) | 66 | 135 | 134 | 63 | 123 | 123 |
| Election Microscope ($m^2$/g) | 123.4 | 135.3 | 131.9. | 94 | 105.6 | 105.3 |
| Mean Particle Size (nm) | 19.4 | 18.4 | 19.2 | 25.1 | 23.1 | 23.8 |
| HI | 1.59 | 1.51 | 1.48 | 1.64 | 1.55 | 1.50 |

\* Effective diameter based on cross sectional flow area.

\*\* At calculated flame temperature, excluding combustion gases formed from feedstock hydrocarbon.

It should be understood that the foregoing relates only to preferred embodiments of the present invention, and that numerous changes and modifications therein may be made without departing from the spirit and scope of the invention as defined in the following claims.

### Claims

1. Apparatus for the production of carbon black having a heterogeneity index greater than 1.55 and less than or equal to about 2.0, comprising:

means for producing a flow of hot gas indicating a combustion chamber, the combustion chamber having an outlet opening so the hot gas flows from the combustion chamber and defining a cross-sectional flow area;

a choke having an outlet opening for receiving the flow of hot gas from the combustion chamber, and an outlet opening so that the hot gas flows through the choke, the choke defining a cross-sectional flow area, the ration of the cross-sectional flow area of the combustion chamber to the cross-sectional flow of the choke being less than or equal to about 6.9;

an exit chamber having an inlet opening for receiving the flow of hot gas from the exit chamber, the exit chamber defining a cross-sectional flow area and the ratio of the cross-sectional flow area of the exit chamber to the cross-sectional flow area of the choke being less than or equal to about 3.5;

means for directing the flow of hot gas substantially axially through the choke; and

means for introducing feedstock hydrocarbon into the substantially axial flow of hot gas upstream of the outlet opening of the choke thereby forming a substantially axial flow of reaction mixture including hot gas

9

and particles of forming carbon black,
whereby the reaction mixture undergoes low turbulence mixing and formation of coke and refractory grit are substantially reduced, while a high carbon black production rate is maintained.

2. Apparatus as in claim 1, wherein the cross-sectional area of the choke is greater than about 50 square inches.

3. Method for the production of carbon black having a heterogeneity index greater than 1.55 and less than or equal to about 2.0, comprising the steps of:
producing a flow of hot gas with a combustion chamber, the combustion chamber having an outlet opening from which the hot gas flows from the combustion chamber and defining a cross-sectional flow area;
providing a choke having an inlet opening for receiving the flow of hot gas from the combustion chamber and an outlet opening so that the hot gas flows through the choke, the choke defining a cross-sectional flow area and the ratio of the cross-sectional flow area of the combustion chamber to the cross-sectional flow area of the choke being less than or equal to about 6.9;
providing an exit chamber having an inlet opening for receiving the flow of hot gas from the choke and an outlet opening so that the hot gas flows through the exit chamber, the exit chamber defining a cross-sectional flow area and the ratio of the cross-sectional flow area of the exit chamber to the cross-sectional flow area of the choke being less than or equal to about 3.5;
directing the flow of hot gas substantially axially through the choke; and
introducing feedstock hydrocarbon into the substantially axial flow of hot gas upstream of the outlet opening of the choke thereby forming a substantially axial flow of reaction mixture including hot gas and particles of forming carbon black,
whereby the reaction mixture undergoes low turbulence mixing and formation of coke and refractory grit are substantially reduced, while a high carbon black production rate is maintained.

4. Method as in claim 3, wherein the cross sectional area of the choke provided is greater than about 50 square inches.

5. Method as in Claim 3, wherein the hot gas is directed through the choke at a linear velocity of less than about 1200 feet per second.

6. Method as in Claim 5, wherein the cross sectional area of the choke provided is greater than about 50 square inches.

7. Method as in Claim 3, wherein the hot gas is directed through the choke at a linear velocity of less than about 1000 feet per second.

8. Method as in claim 7, wherein the cross sectional area of the choke provided is greater than about 50 square inches.